# EUROPEAN PATENT SPECIFICATION

(11) **EP 3 523 223 B1**
(45) Date of publication and mention of the grant of the patent: **07.06.2023**
(21) Application number: 17780901.9
(22) Date of filing: 05.10.2017
(51) Int. Cl.: B65G 17/32, B65G 17/24

(54) **DEVICE FOR CONVEYING OBJECTS**
VORRICHTUNG ZUM FÖRDERN VON GEGENSTÄNDEN
DISPOSITIF DE TRANSPORT D'OBJETS

(30) Priority: 06.10.2016 IT 201600100333
(43) Date of publication of application: 14.08.2019
(73) Proprietor: I.M.A. Industria Macchine Automatiche S.p.A., 40064 Ozzano dell'Emilia (BO) (IT)
(72) Inventor: COCCHI, Christian, 40064 Ozzano dell'Emilia (Bologna) (IT)
(74) Representative: Luppi Intellectual Property S.r.l.
(86) International application number: PCT/IB2017/056140
(87) International publication number: WO 2018/065928

(56) References cited:
- JP-U- S56 162 217
- US-B1- 6 179 129

## Description

### Background of the invention

The invention relates to a device for conveying objects, in particular objects with an outer surface (for example of cylindrical shape) that has to be inspected whilst the objects advance conveyed by the device.

Specifically, but not exclusively, the invention can be applied in motion cartoners configured for packaging objects (such as for example bottles, tubes, blisters, vials, syringes, etc) inside cartons.

The prior art comprises motion cartoners comprising a conveyor device in which a plurality of containers (boxes), arranged one behind the other, is moved by a flexible member (chain) that is slidable in a closed loop. Each container comprises two transverse sides that contain laterally the object and convey the object in a path where an inspection apparatus (with optical sensor) is arranged that reads a barcode applied to the outer surface of the object.

One problem of the prior art is that reading of the barcode is not assured because normally the object crosses the field of view of the inspection apparatus whilst it is lying horizontally inside the box, and the barcode could be situated on the lower side of the object hidden from inspection.

Patent publications US6179129B1 and US5267654A show a conveyor device according to the preamble of the first claim. In US6179129B1 the device conveys apples each of which is supported by a movable set of rotating cones associated with pinions engaged with a stationary rack, in order to rotate the apple to determine its color. The conveyor device shown by US5267654A comprises a set of movable cradles each containing an article supported by a pair of rollers rotating in response to a wheel rolling on a fixed plate disposed in an area where an optical scanner operates.

### Summary of the invention

One object of the invention is to make a conveyor device for objects that is able to solve the aforesaid prior-art problem.

One advantage is that the conveyor device is easily and practically adaptable to objects of different dimensions (diameters).

One advantage is to provide a conveyor device that is able to ensure correct inspection of the object whilst the object is being conveyed.

One advantage is to provide a conveyor device that is able to ensure that during conveying of an object a sign (barcode) arranged on the side surface of the object can be detected properly.

One advantage is to make available a device that is able to convey an object and rotate the object on itself to enable an inspection apparatus to check the entire side surface of the object during conveying.

One advantage is to rotate the object on itself, along a portion of path that is relatively reduced during conveying of the object, by an angle that is sufficient to ensure that a sign on the object, for example a barcode, is read at least once.

One advantage is to permit rapid and reliable inspection of an object moved by the conveyor device.

One advantage is to give rise to a conveyor device that is constructionally simple and cheap.

One object of the invention is to make an inspection apparatus that uses the aforesaid conveyor device.

One object of the invention is to make a cartoning machine that uses the aforesaid inspection apparatus.

Such objects and advantages, and also others, are achieved by the conveyor device and/or by the inspection apparatus and/or by the cartoning machine according to one or more of the claims set out below.

In one embodiment, a conveyor device comprises at least one closed-loop movable flexible member that carries a plurality of containers arranged one behind the other, in which each container, which is configured for containing and conveying at least one object along a path in a direction of advancement, comprises at least one rotating element configured for restingly receiving at least one object in such a manner that a rotation of said at least one rotating element causes by friction a rotation on itself of the resting object, in which at least one abutment element is arranged for engaging in contact at least one end of said at least one rotating element so as to cause by friction a rotation of said at least one rotating element so as to cause a rotation of the object. The abutment element may comprise a stationary or driven movable flexible member (belt), or an abutment. The engaged end of the rotating element may comprise a pulley or a wheel.

In one embodiment, an inspection apparatus for inspecting objects, in particular for a cartoning machine that packages one or more objects in a respective box, comprises a viewing/reading system arranged on an advancement path of the objects in which a driven movable flexible member (chain) carries a plurality of containers (boxes), in which each container comprises at least one rotating element (roller) that restingly receives an object that can be rotated by friction from a rotation of the rotating element, in which at least one abutment element, fixed or movable, is engaged in contact with the various rotating elements to rotate by friction the rotating elements during advancement of the objects, causing the objects to rotate on themselves, so that the viewing/reading system can inspect the surface of the objects whilst they rotate on themselves. The rotation of the objects at the width of view may be in particular, about the same as or greater than 360°, or anyway such as to ensure that a barcode, or another sign, located on the objects is read at least once.

### Brief description of the drawings

The invention can be understood and implemented better with reference to the attached drawings that illustrate some embodiments thereof by way of non-limiting example, wherein:

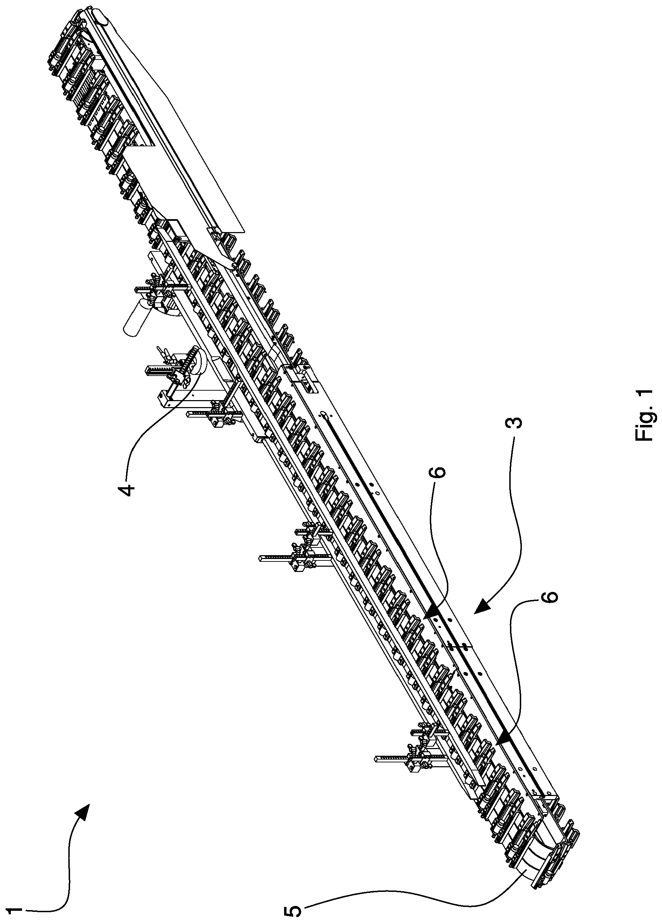

Figure 1 shows a perspective view of a first embodiment of an inspection apparatus with a conveyor device according to the invention;

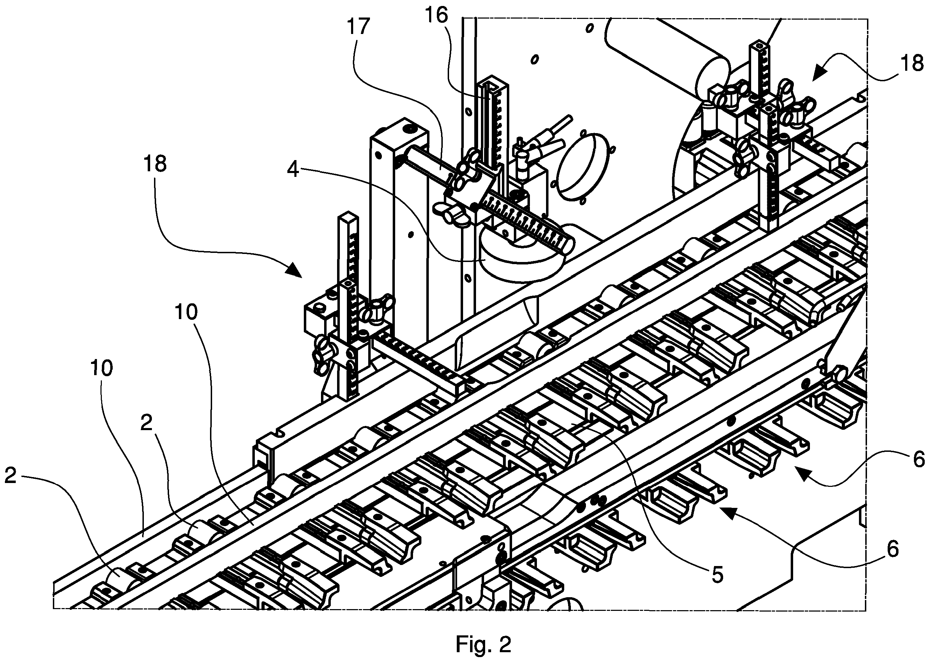

Figure 2 shows an enlarged detail of figure 1;

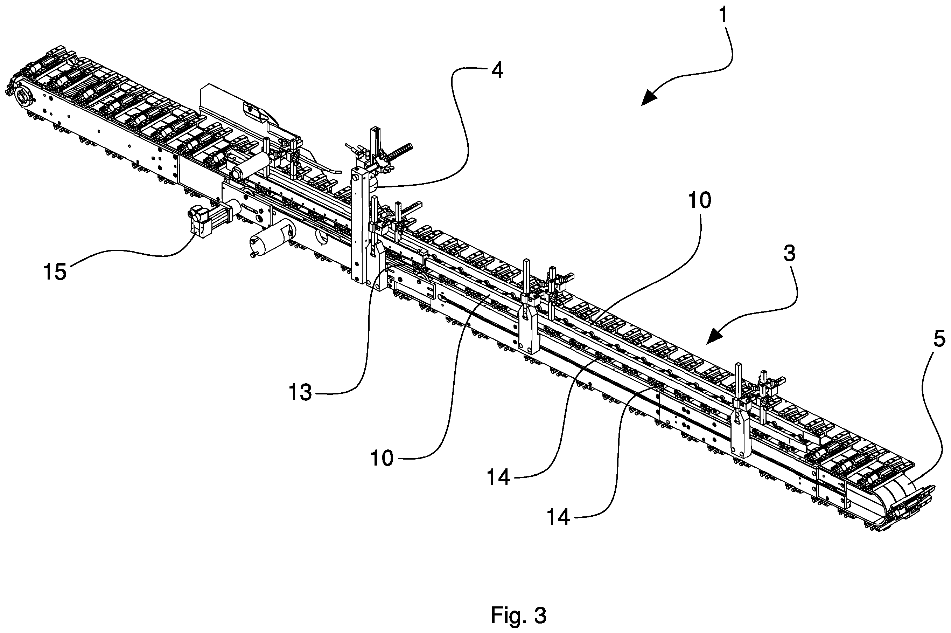

Figure 3 shows the apparatus of Figure 1 in another perspective;

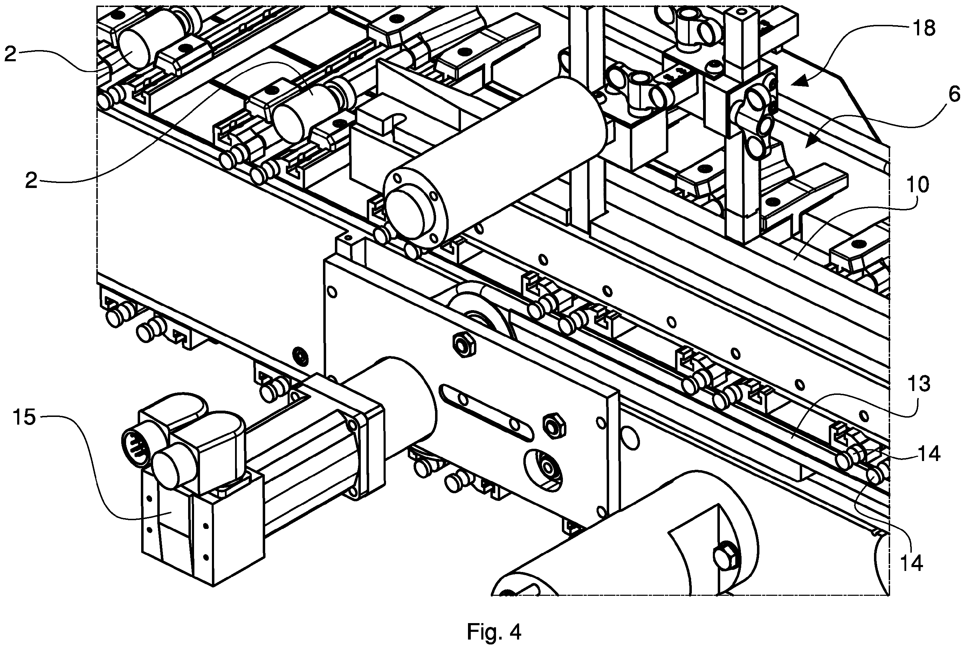

Figure 4 shows an enlarged detail of Figure 3;
Figure 5 shows a perspective view of the container for objects that belongs to the conveyor device of Figure 1;

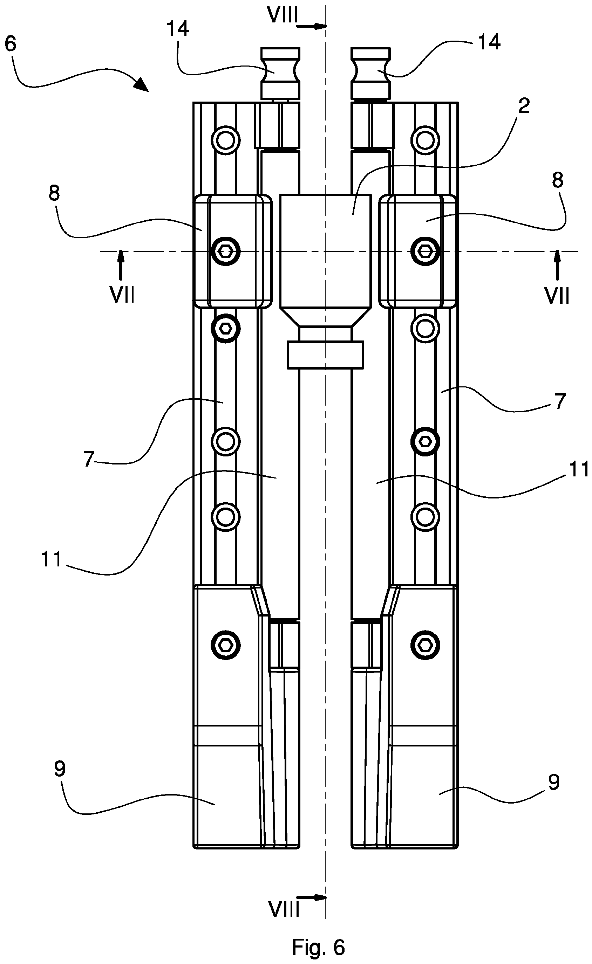

Figure 6 shows a top view of the container of Figure 5;
Figure 7 shows section VII-VII of figure 6;
Figure 7A shows a section of the container as in Figure 7 in a different configuration suitable for objects of different diameter;
Figure 8 shows section VIII-VIII of figure 6;
Figure 9 shows a perspective view of another embodiment of a container for objects that is usable as an alternative to the container for objects of Figure 5;
Figure 10 is a diagram of a cartoning machine that comprises an inspection apparatus according to the invention.

### Detailed description

With reference to the aforesaid figures, with 1 overall an inspection apparatus has been indicated for inspecting objects, in particular for bottles, tubes, blister, vials, syringes, etc. The objects have been indicated by 2. The inspection apparatus 1 may be configured, in particular, for reading a sign (for example a graphic element, in particular a barcode) arranged on each object 2. The sign may be located, in particular, on a (cylindrical) side surface of the object.

The inspection apparatus 1 may be configured, in particular, for operating with a viewing field that includes at least one portion of a path that is traversed by the objects 2 moved by a conveyor device 3.

The inspection apparatus 1 may comprise, as in this embodiment, at least one image acquisition system (comprising for example an image sensor 4) arranged for framing a path portion of the objects moved by the conveyor device 3, along which each object 2 is rotated (as will be explained better below) by an angle of rotation that is sufficient to enable the sign to be read at least once, inspecting the side surface of the object.

An "image acquisition system" is defined as a system (for example an optoelectronic system) that is able to acquire images of an object and, in particular, process these images so as to extract therefrom features of interest (for example reading of a barcode). The system may comprise, in particular, a body on which the (electronic) image sensor 4 is arranged, for example one or more photosensitive elements, in particular of the CCD or CMOS type, and appropriate optical receiving means fixed to the body, for example an objective consisting of one or two lenses by means of which the sensor is suitable for receiving the light spread by the object. A controller is associated with the image acquisition apparatus to control acquisition of the image, to process if necessary the image acquired and communicate the result of the inspection to an external control system, for example the control system for controlling a cartoning machine, to reject a defective object (bottle). "Viewing field" also means a field of acquisition of the inspection apparatus, or a preset area within which the images of the object can be acquired.

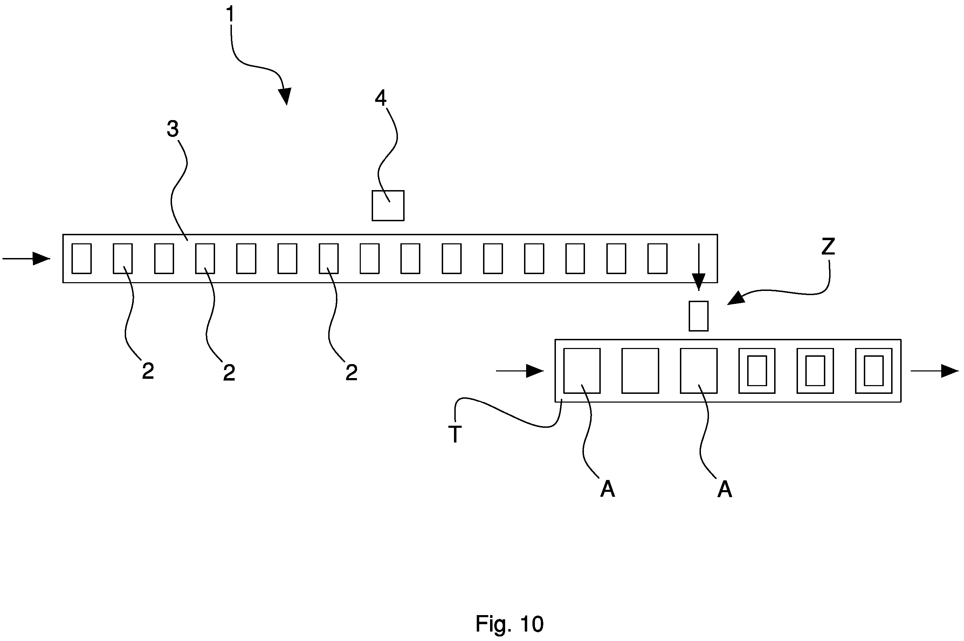

The inspection apparatus 1 may be inserted into a cartoning machine for packaging one or more objects 2 in a respective box A. The cartoning machine, shown schematically in figure 10, may comprise a box conveyor T (for example of known type) that conveys the boxes A to an inserting zone Z to which the objects 2 are also fed that have been previously inspected by the inspection apparatus 1 (with methods that will be explained better below). In the inserting zone the objects 2 are faced to an opening of the box and are then inserted into the box. The objects inserting device, which may be, for example, of known type, has not been shown.

The conveyor device 3 may comprise, in particular, at least one moving member 5. The moving member 5 may comprise, as in this embodiment, a closed loop movable chain (box chain). The moving member 5 may be driven at the command of a motor controlled by (electronic programmable) control means that controls the inspection apparatus 1 and the conveyor device 3 and is connected to the various sensors and actuators of the apparatus 1 and of the device 3.

The conveyor device 3 may comprise, in particular, a plurality of containers 6 (boxes) moved by the moving member 5 and arranged (fixed) one after the other on the moving member 5.

In an alternative embodiment that is not illustrated, the moving member 5 may comprise a plurality of linear motor carriages, moved independently of one another, each of which has a respective container 6.

Each container 6 may be configured, in particular, for containing and conveying at least one object 2 along the aforesaid path of the objects, in a direction of advancement. Each container 6 may comprise, as in these embodiments, at least two lateral containment walls 7 containing at least one object 2. Each lateral containment wall 7 may be extended in length in a longitudinal (axial) direction that is transverse (perpendicular) to the aforesaid direction of advancement.

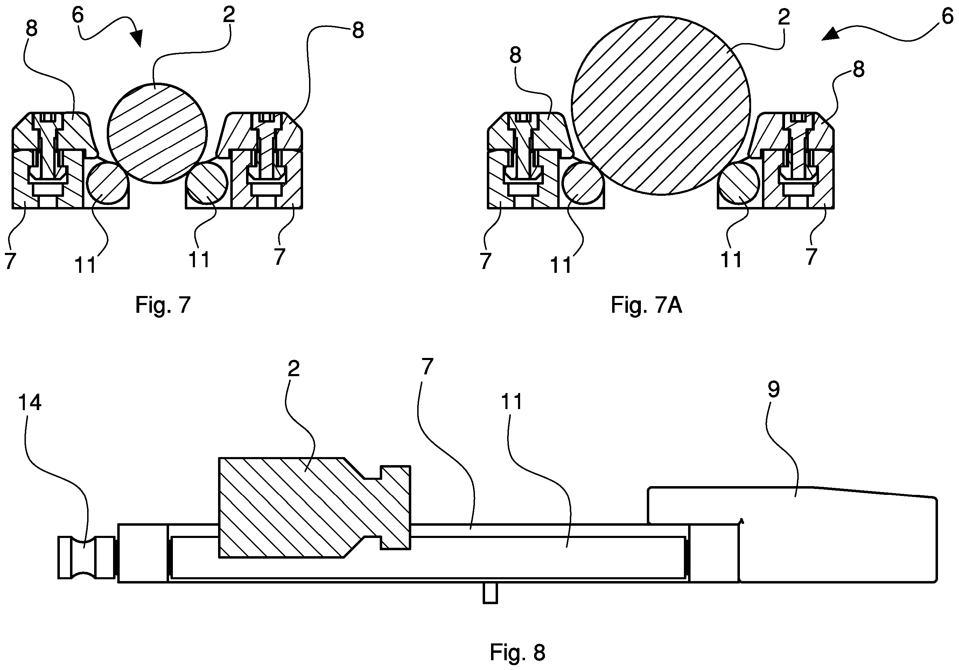

For each container 6, the lateral side containment walls 7 may be configured so as to be positionable at a reciprocal distance (considered along the direction of advancement) which is adjustable as a function of at least one dimension of the objects 2 to be conveyed, in particular depending on the transverse dimension, or width, or diameter of the objects. Figures 7 and 7A show the same two walls 7 positioned at two different reciprocal distances to support two different (cylindrical) objects 2 with two different widths. For each container 6, the two walls 7 may be formed by two distinct elements that are positionable and can be fixed removably and independently of each other on the moving member 5. The various pairs of walls 7 may be fixed to the moving member 5 by appropriately selecting the reciprocal distance between the walls 7 of each pair of walls depending on the size of objects 2 to be transported.

Each lateral containment wall 7 may comprise, in particular, at least one abutment wall 8 that is opposed to a lateral deviation of the object 2 housed in the container 6. The abutment wall 8 may be positionable in an adjustable manner, along the aforesaid longitudinal (axial) direction, according to the length of the object 2, to prevent the object being able to exit the container 6, for example because of jumps or other irregularities.

Each container 6 may comprise, as in this case, an outlet, through which the object 2, after being inspected, is expelled from the container 6 to be, in particular, introduced into a package. Each container 6 comprises, at the outlet of the object 2, at least one pair of guides 9 arranged alongside and cooperating with one another to guide the object 2 outside the container 6.

The conveyor device 3 may comprise, in particular, at least one pair of guiding bars 10, arranged parallel to each other in the aforesaid direction of advancement of the objects 2. The guiding bars 10 are configured in such a manner as to maintain the objects 2 in the desired position, with reference to the aforesaid longitudinal (axial) direction. The reciprocal distance between the guiding bars 10 may be adjustable in such a manner as to adapt to the length of the objects 2.

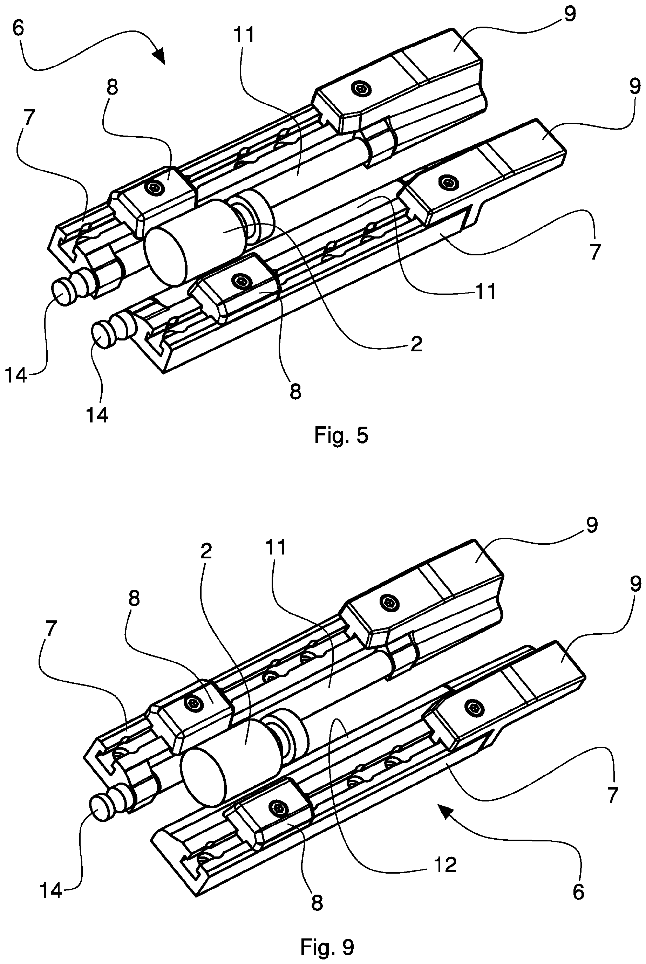

With each container 6 at least one rotating element 11 (roller) may be associated that is mounted on the container 6 with a rotation axis that is transverse to the aforesaid direction of advancement of the objects 2. In the embodiment in Figure 5 two rotating elements 11 are arranged that are alongside and parallel to one another. In the embodiment in Figure 9 only one rotating element 11 is arranged, so the object 2 will rest on one side on the rotating element 11 and on the opposite side on a fixed element 12.

The rotating element 11 is configured for restingly receiving at least one object 2 so that a rotation of the rotating element 11 causes, through the effect of friction, a rotation (rolling) on itself of the resting object 2.

The conveyor device 3 may comprise, in particular, at least one abutment element 13 arranged for engaging in contact at least one end 14 (or portion) of each rotating element 11 along a portion of the path of the objects, such that the contact engagement between the abutment element 13 and the end 14 (or portion) of the rotating element 11, along the aforesaid path portion, determines, through the effect of the contact friction, a rotation of the rotating element 11 that is such as to cause a rotation (rolling) of the object on itself. Alternatively, a form of dragging through lodging between the abutment element 13 and the end 14 may be devised (for example by pulley and toothed belt, or by rack and pinion).

The abutment element 13 may comprise a fixed (flexible) element, or driven movable element, as in this case. With 15 a motor has been indicated that drives the movement of the abutment element 13. This (driven) abutment element 13 may comprise, in particular, a closed loop flexible member (for example a belt, in this case a round belt, for example a polycord belt).

The aforesaid end 14 of the rotating element 11 may comprise, as in this embodiment, at least one pulley (coaxial with the rotation axis of the rotating element 11) engaging with the abutment element 13 (belt). The pulley rolls along the belt (which is also movable) causing the rotation of the rotating element 11 and consequently of the object 2. It is possible to control the rotation speed of the rotating element 11, and thus the rotation speed on itself of the object 2, for example by control of the motor 15.

In another embodiment, which is not illustrated, the abutment element could comprise a fixed element on which an end (or portion) of the rotating element 11 runs. The aforesaid fixed abutment element could comprise, for example, an abutment plane. The end of the rotating element 11 could comprise, for example, a wheel that rolls along the fixed (plane) abutment element.

As said, the image acquisition system (with image sensor 4) inspects the objects 2 whilst the latter advance on the path defined by the conveyor device 3. The image acquisition system, in particular, inspects the objects by reading the sign (barcode) arranged on the lateral surface of the objects 2. The image acquisition system may comprise, as in this case, at least one image sensor 4 (e.g. a camera) that is positionable, with respect to the path of the objects 2 conveyed by the conveyor device 3, in an adjustable manner both in the longitudinal direction (parallel to the length of the object), and in an observation height direction that is transverse to both the longitudinal direction and to the direction of advancement, to enable a viewing width, or viewing field, to be modified. In the specific case, the image sensor 4 is arranged on a support that is positionable on a measuring rod 16 that is parallel to the observation height direction and which is in turn positionable on another measuring rod 17 that is parallel to the longitudinal (axial) direction.

In this specific case, the direction of advancement of the objects is horizontal, the longitudinal direction (of extent in length of the containing side walls and of the objects) is horizontal and perpendicular to the direction of advancement, the observation height direction is vertical.

Each container 6 (box) of the conveyor device 3 (box chain) comprises, as has been seen, at least one rotating element 11 (roller) the rotation of which causes rolling of the object 2 (bottle). The rotating element 11 may be rotated by at least one abutment element 13 (belt) whilst the object 2 advances housed in the container 6, at least for a portion of the advancement path, by virtue of the coupling between the abutment element 13 and an end 14 (or portion) of the rotating element 11, in particular an end 14 provided with a pulley or with a wheel or with another rolling element that is integral with the rotating element 11 and engages the abutment element 13.

The abutment element 13 may comprise a movable element that is adjustably driven by a motor 15, which can permit the rotation speed of the rotating element 11 to be adjusted and thus the rotation speed of the object 2 on itself. It is possible, in particular, to rotate the object on itself for a relatively short portion of the objects path, with a rotation that is such that the sign to be read is detected at least once by the image acquisition system.

The movement of the abutment element 13 (belt) may be actuated by the motor 15 in an adjustable manner (by means of programmable electronic control means provided with appropriate program instructions) and according to at least one dimension of the object 2 carried, in particular of a width (diameter) of the object 2. The adjustment may be performed so as to increase the speed of the abutment element 13 for relatively larger objects 2 and to decrease such speed for relatively smaller objects. The speed of the abutment element 13 may then be adjusted according to the dimension of the object 2 and consequently as a function of the distance between the two walls 7 which guide the object 2 sideways. The object 2 may thus be commanded to perform at least one full turn on itself in the control area of the detecting means (camera), so if the object is of relatively small diameter - so the side walls 7 of the container 6 (box) are closer to each other - there will be enough a relatively low speed of the abutment element 13 (belt) and hence a relatively low rotation speed of the rotating element(s) 11 (rolls), and if the product is of relatively large diameter - so the side walls 7 are further distant one to the other - will require a relatively high speed of the abutment element 13 and hence a relatively high rotational speed of the rotating element(s) 11. In practice, the speed of the abutment element 13 may be adjusted (for example, manually) case by case.

In the specific embodiment disclosed here, the object 2, whilst it is inside the container 6 and is moved through the effect of the controlled movement of the moving member 5 (chain), is guided by the two guiding bars 10 that hold the moving member 5 in position axially, such that the image acquisition system can see the sign (barcode) on the object 2 (bottle) always in the same position. The guiding bars 10, as said, are adjustable to adapt to the length of the bottle. With 18, the two adjusting systems have been indicated for adjusting the position of the bars 10, one for each bar 10, each provided with one or more measuring rods.

The axial position of the image sensor 4 is adjustable to be positioned above the sign (barcode) of the object 2. As said, in order to be certain that the image sensor 4 sees the sign (barcode) at least once for each object 2, the image sensor may have a view size that comprises the entire portion of the advancement path along which the object 2 rotates by a rotation angle that is suitable for ensuring reading of the sign. The adjustable height of the image sensor 4 enables the viewing field thereof to be modified.

In use, the rotating elements 11 are rotated by the ends 14 (pulleys) engaging the abutment element 13 (belt), as in this specific embodiment, or, in other embodiments, by wheels (integral with the rotating elements 11) that roll through friction on an abutment plane, or by toothed wheels (integral with the rotating elements 11) coupled with a rack, etc.

It is possible to provide other versions that are different from what has been disclosed up to now.

For example, it is possible to use a further rotating element, which is also mounted integrally on the container, arranged restingly above the object, in order to encourage rolling of the object.

For example, it is possible to use a further flexible element (in particular a closed loop flexible element, such as for example a belt) arranged above the objects, in contact with the objects, with at least one branch of element extending at least over the path portion in which the objects are rolled, which is configured (for example by a motor drive) to move at the same tangential speed as the rotating objects to act as an upper abutment for the objects, promoting the rolling of the objects and/or the stability thereof.

## Claims

1. A conveyor device (3) comprising:
- at least one moving member (5);
- a plurality of containers (6) carried by said at least one moving member (5) and arranged one after the other, in which each container (6) is configured to hold and carry at least one object (2) along a path in a direction of advancement, wherein each container (6) comprises at least two lateral containment walls (7) for at least one object (2), wherein each lateral containment wall (7) extends in length in a longitudinal direction that is transverse to said direction of advancement;
- for each container (6), at least one rotating element (11) configured to receive and support at least one object (2) in such a way that a rotation of said at least one rotating element (11) causes a rotation of the supported object (2);
**characterized in that**, for each container (6), said at least two lateral containment walls (7) are configured so as to be movable one with respect to the other so that it is possible to vary their reciprocal distance considered along said direction of advancement.

2. Device according to claim 1, wherein, for each container (6), said at least two lateral containment walls (7) are two distinct elements positionable and removably fixable independently of one another to said at least one moving member (5).

3. Device according to claim 1 or 2, wherein each container (6) comprises at least two rotating elements (11) cooperating with each other to receive and support at least one object (2), said at least two rotating elements (11) being carried by said lateral containment walls (7) so that said at least two rotating elements also can vary their reciprocal distance considered along said advancement direction.

4. Device according to any one of the preceding claims, further comprising at least one abutment element (13) arranged to engage in contact with at least one end (14) of said at least one rotating element (11) along a portion of said path so as to cause a rotation of said at least one rotating element (11)

5. Device according to claim 4, wherein said at least one abutment element (13) comprises a movable element that is adjustably driven, the speed of said movable element being controlled by control means as a function of at least one dimension of the objects (2) to be transported so that the object (2), regardless of its size, performs at least one full turn on itself while running a certain length of advancement.

6. Device according to claim 5, wherein said movable driven element comprises a closed loop flexible member.

7. Device according to claim 4, wherein said at least one abutment element comprises a fixed element onto which said end (14) can run.

8. Device according to any one of claims 4 to 7, wherein said at least one end (14) comprises at least one pulley, or roller, coaxial with said axis of rotation and engaged with said abutment element (13).

9. Device according to any one of the preceding claims, wherein each container (6) comprises an outer portion where at least one pair of guides (9) is placed and configured to cooperate and guide the object (2) outside the container (6).

10. Device according to any one of the preceding claims, wherein said rotating element (11) has a rotational axis that is transverse to said direction of advancement.

11. Device according to any one of the preceding claims, wherein each of said at least two lateral containment walls (7) comprises at least one abutment wall (8) that is opposing to a lateral deviation of the object and that is adjustably positionable along said longitudinal direction according to the length of the object (2).

12. Device according to any one of the preceding claims, comprising at least a pair of guiding bars (10) arranged parallel to each other along said direction of advancement to maintain the object (2) in position in said longitudinal direction, the mutual distance between the bars of said at least a pair of bars (10) being adjustable so as to assume a configuration according to the length of the object (2).

13. Inspection apparatus (1) for inspecting objects comprising:
- a conveyor device (3) for objects according to any one of the preceding claims;
- an image acquisition system arranged to frame said portion of said path where the object (2) rotates in such a way as to allow an inspection of a side surface of the object (2).

14. Apparatus according to claim 13, wherein said image acquisition system comprises at least an image sensor (4) adjustably movable, with respect to objects (2) transported by said conveyor device (3), both in said longitudinal direction parallel to the length of the object (2), and in an observation height direction that is transverse to said longitudinal direction and to said direction of advancement to allow for modifying a width of view.

15. Cartoning machine for packaging one or more objects in a respective box (A), comprising a cartoning conveyor to an insertion zone and an inspection apparatus made according to claim 13 or 14, wherein the objects (2) inspected are fed to said insertion zone where they are facing an opening of the box and are then inserted into the box.

16. Cartoning machine according to claim 15, wherein, in said conveyor device of said inspection apparatus, each container (6) comprises an outlet in which at least one pair of guides (9) is arranged side by side and cooperating with each other to guide the object (2) outside the container (6) when the object faces said opening of the box and is then inserted into the box.

## Patentansprüche

1. Fördervorrichtung (3), mit:
- zumindest einem sich bewegenden Element (5);
- einer Mehrzahl von Behältnissen (6), die von dem zumindest einen sich bewegenden Element (5) getragen und nacheinander angeordnet sind, von denen jedes Behältnis (6) dazu ausgebildet ist, zumindest ein Objekt (2) entlang eines Pfades in einer Vorrückrichtung zu halten und zu tragen, wobei jedes Behältnis (6) zumindest zwei seitliche Behältniswände (7) für zumindest ein Objekt (2) aufweist, wobei jede seitliche Behältniswand (7) sich in der Länge in einer Längsrichtung erstreckt, die quer zu der Vorrückrichtung verläuft;
- zumindest einem sich drehenden Element (11) für jedes Behältnis (6), das dazu ausgebildet ist, zumindest ein Objekt (2) derart aufzunehmen und zu unterstützen, dass eine Drehung des zumindest einen sich drehenden Elements (11) eine Drehung des unterstützten Objekts (2) verursacht;
**dadurch gekennzeichnet, dass** für jedes Behältnis (6) die zumindest zwei seitlichen Behältniswände (7) beweglich bezüglich zueinander ausgebildet sind, so dass es möglich ist, ihren gegenseitigen Abstand, entlang der Vorrückrichtung betrachtet, zu variieren.

2. Vorrichtung nach Anspruch 1, wobei für jedes Behältnis (6) die zumindest zwei seitlichen Behältniswände (7) zwei gesonderte Elemente sind, die unabhängig voneinander positionierbar und an dem zumindest einen sich bewegenden Element (5) abnehmbar fixierbar sind.

3. Vorrichtung nach Anspruch 1 oder 2, wobei jedes Behältnis (6) zumindest zwei sich drehende Elemente (11) aufweist, die miteinander zusammenwirken, um zumindest ein Objekt (2) aufzunehmen und zu unterstützen, wobei die zumindest zwei sich drehenden Elemente (11) von den seitlichen Behältniswänden (7) getragen werden, so dass die zumindest zwei sich drehenden Elemente auch ihren gegenseitigen Abstand, entlang der Vorrückrichtung betrachtet, variieren können.

4. Vorrichtung nach irgendeinem der vorhergehenden Ansprüche, weiterhin mit zumindest einem Anlageelement (13), das dazu angeordnet ist, mit zumindest einem Ende (14) des zumindest einen sich drehenden Elements (11) entlang eines Abschnittes des Pfades in Berührung zu kommen, um so eine Drehung des zumindest einen sich drehenden Elements (11) zu verursachen.

5. Vorrichtung nach Anspruch 4, wobei das zumindest eine Anlageelement (13) ein bewegliches Element aufweist, das einstellbar angetrieben ist, wobei die Geschwindigkeit des beweglichen Elements durch Steuerungsmittel als Funktion zumindest einer Dimension der zu transportierenden Objekte (2) gesteuert ist, so dass die Objekte (2) ungeachtet ihrer Größe zumindest eine volle Umdrehung um sich selbst ausführen, während sie eine bestimmte Vorrückstrecke laufen.

6. Vorrichtung nach Anspruch 5, wobei das bewegliche angetriebene Element ein flexibles Element mit geschlossener Schleife aufweist.

7. Vorrichtung nach Anspruch 4, wobei das zumindest eine Anlageelement ein festes Element aufweist, auf dem das Ende (14) laufen kann.

8. Vorrichtung nach irgendeinem der Ansprüche 4 bis 7, wobei das zumindest eine Ende (14) zumindest eine Riemenscheibe oder Rolle aufweist, die koaxial mit der Drehachse verläuft und mit dem Anlageelement (13) in Eingriff steht.

9. Vorrichtung nach irgendeinem der vorhergehenden Ansprüche, wobei jedes Behältnis (6) zumindest einen äußeren Abschnitt aufweist, wo zumindest ein Paar Führungen (9) angeordnet und dazu ausgebildet ist, mit dem Objekt (2) außerhalb des Behältnisses (6) zusammenzuwirken und dieses zu führen.

10. Vorrichtung nach irgendeinem der vorhergehenden Ansprüche, wobei das sich drehende Element (11) eine Drehachse aufweist, die quer zu der Vorrückrichtung verläuft.

11. Vorrichtung nach irgendeinem der vorhergehenden Ansprüche, wobei jede der zumindest zwei seitlichen Behältniswände (7) zumindest eine Anlagewand (8) aufweist, die einer seitlichen Abweichung des Objekts entgegenwirkt und die entlang der Längsrichtung gemäß der Länge des Objekts (2) einstellbar positionierbar ist.

12. Vorrichtung nach irgendeinem der vorhergehenden Ansprüche, mit zumindest einem Paar Führungsstangen (10), die parallel zueinander entlang der Vorrückrichtung angeordnet sind, um das Objekt (2) in der Längsrichtung in Position zu halten, wobei der gegenseitige Abstand zwischen den Stangen des zumindest einen Paars Stangen (10) einstellbar ist, um eine Konfiguration gemäß der Länge des Objekts (2) anzunehmen.

13. Inspektionsvorrichtung (1) zum Inspizieren von Objekten, mit:
- einer Fördervorrichtung (3) für Objekte gemäß irgendeinem der vorhergehenden Ansprüche;
- einem Bilderfassungssystem, das dazu angeordnet ist, den Abschnitt des Pfades zu erfassen, wo sich das Objekt (2) dreht, derart, um eine Inspektion einer Seitenoberfläche des Objekts (2) zu ermöglichen.

14. Vorrichtung nach Anspruch 13, wobei das Bilderfassungssystem zumindest einen Bildsensor (4) aufweist, der bezüglich der Objekte (2), die von der Fördervorrichtung (3) transportiert werden, sowohl in der Längsrichtung parallel zu der Länge des Objekts (2) als auch in einer Beobachtungshöhenrichtung, die quer zu der Längsrichtung und zu der Vorrückrichtung verläuft, einstellbar beweglich ist, um eine Blickweite zu modifizieren.

15. Kartoniermaschine zum Verpacken eines oder mehrerer Objekte in eine jeweilige Box (A), mit einem Kartonierförderer zu einem Einsetzbereich und einer Inspektionsvorrichtung nach Anspruch 13 oder 14, wobei die inspizierten Objekte (2) zu dem Einsetzbereich geführt werden, wo sie einer Öffnung der Box zugewandt sind und dann in die Box eingesetzt werden.

16. Kartoniermaschine nach Anspruch 15, wobei in der Fördervorrichtung der Inspektionsvorrichtung jedes Behältnis (6) einen Auslass aufweist, in dem zumindest ein Paar Führungen (9) Seite an Seite angeordnet ist und miteinander zusammenwirken, um das Objekt (2) außerhalb des Behältnisses (6) zu führen, wenn das Objekt der Öffnung der Box zugewandt ist und dann in die Box eingesetzt wird.

## Revendications

1. Dispositif de transporteur (3) comprenant :
- au moins un élément mobile (5) ;
- une pluralité de moyens de contenance (6) qui sont supportés et déplacés par ledit au moins un élément mobile (5) et qui sont agencés les uns après les autres, dans lequel chaque moyen de contenance (6) est configuré pour contenir et soutenir ainsi que pour supporter et déplacer au moins un objet (2) le long d'une voie dans une direction d'avancement, dans lequel chaque moyen de contenance (6) comprend au moins deux parois de retenue latérales (7) pour au moins un objet (2), dans lequel chaque paroi de retenue latérale (7) est étendue en longueur dans une direction longitudinale qui est transversale par rapport à ladite direction d'avancement ; et
- pour chaque moyen de contenance (6), au moins un élément rotatif (11) qui est configuré pour recevoir et supporter au moins un objet (2) de telle sorte qu'une rotation dudit au moins un élément rotatif (11) génère une rotation de l'objet supporté (2) ;
**caractérisé en ce que**, pour chaque moyen de contenance (6), lesdites au moins deux parois de retenue latérales (7) sont configurées de manière à ce qu'elles puissent être déplacées l'une par rapport à l'autre de telle sorte qu'il soit possible de modifier leur distance mutuelle considérée suivant ladite direction d'avancement.

2. Dispositif selon la revendication 1, dans lequel, pour chaque moyen de contenance (6), lesdites au moins deux parois de retenue latérales (7) sont deux éléments distincts qui peuvent être positionnés et fixés de façon amovible de manière indépendante l'un de l'autre par rapport audit au moins un élément mobile (5).

3. Dispositif selon la revendication 1 ou 2, dans lequel chaque moyen de contenance (6) comprend au moins deux éléments rotatifs (11) qui coopèrent l'un avec l'autre pour recevoir et supporter au moins un objet (2), lesdits au moins deux éléments rotatifs (11) étant supportés par lesdites parois de retenue latérales (7) de telle sorte que la distance mutuelle considérée suivant ladite direction d'avancement desdits au moins deux éléments rotatifs puisse être modifiée.

4. Dispositif selon l'une quelconque des revendications précédentes, comprenant en outre au moins un élément de venue en butée (13) qui est agencé pour engager par contact au moins une extrémité (14) dudit au moins un élément rotatif (11) le long d'une partie de ladite voie de manière à provoquer une rotation dudit au moins un élément rotatif (11).

5. Dispositif selon la revendication 4, dans lequel ledit au moins un élément de venue en butée (13) comprend un élément pouvant être déplacé qui est entraîné de façon réglable, la vitesse dudit élément pouvant être déplacé étant commandée par un moyen de commande en fonction d'au moins une dimension des objets (2) à transporter de telle sorte que l'objet (2), indépendamment de sa dimension, effectue au moins un tour complet sur lui-même tout en cheminant sur une certaine longueur d'avancement.

6. Dispositif selon la revendication 5, dans lequel ledit élément entraîné pouvant être déplacé comprend un élément flexible en boucle fermée.

7. Dispositif selon la revendication 4, dans lequel ledit au moins un élément de venue en butée comprend un élément fixe sur lequel ladite extrémité (14) peut cheminer.

8. Dispositif selon l'une quelconque des revendications 4 à 7, dans lequel ladite au moins une extrémité (14) comprend au moins une poulie, ou un rouleau/galet, qui est coaxial(e) par rapport audit axe de rotation et qui est engagé(e) avec ledit élément de venue en butée (13).

9. Dispositif selon l'une quelconque des revendications précédentes, dans lequel chaque moyen de contenance (6) comprend une partie externe au niveau de laquelle les guides d'au moins une paire de guides (9) sont placés et sont configurés pour coopérer et guider l'objet (2) à l'extérieur du moyen de contenance (6).

10. Dispositif selon l'une quelconque des revendications précédentes, dans lequel ledit élément rotatif (11) présente un axe de rotation qui est transversal par rapport à ladite direction d'avancement.

11. Dispositif selon l'une quelconque des revendications précédentes, dans lequel chacune desdites au moins deux parois de retenue latérales (7) comprend au moins une paroi de venue en butée (8) qui est opposée à une déviation latérale de l'objet et qui peut être positionnée de façon réglable suivant ladite direction longitudinale en fonction de la longueur de l'objet (2).

12. Dispositif selon l'une quelconque des revendications précédentes, comprenant au moins une paire de barres de guidage (10) qui sont agencées parallèlement l'une à l'autre suivant ladite direction d'avancement afin de maintenir l'objet (2) en position dans ladite direction longitudinale, la distance mutuelle entre les barres de ladite au moins une paire de barres (10) pouvant être réglée de manière à ce qu'elles prennent une configuration en fonction de la longueur de l'objet (2).

13. Appareil d'inspection (1) pour inspecter des objets comprenant :
- un dispositif de transporteur (3) pour objets selon l'une quelconque des revendications précédentes ; et
- un système d'acquisition d'images qui est agencé pour cadrer ladite partie de ladite voie au niveau de laquelle l'objet (2) tourne de manière à permettre une inspection d'une surface latérale de l'objet (2).

14. Appareil selon la revendication 13, dans lequel ledit système d'acquisition d'images comprend au moins un capteur d'images (4) qui peut être déplacé de façon réglable, par rapport à des objets (2) qui sont transportés par ledit dispositif de transporteur (3), à la fois dans ladite direction longitudinale en parallèle à la longueur de l'objet (2), et dans une direction de hauteur d'observation qui est transversale par rapport à ladite direction longitudinale et par rapport à ladite direction d'avancement pour permettre une modification d'une largeur du champ de vision.

15. Machine d'encartonnage pour emballer un ou plusieurs objets dans une boîte respective (A), comprenant un transporteur d'encartonnage jusqu'à une zone d'insertion et un appareil d'inspection constitué selon la revendication 13 ou 14, dans laquelle les objets (2) qui sont inspectés sont alimentés jusqu'à ladite zone d'insertion au niveau de laquelle ils font face à une ouverture de la boîte puis ils sont insérés à l'intérieur de la boîte.

16. Machine d'encartonnage selon la revendication 15, dans laquelle, dans ledit dispositif de transporteur dudit appareil d'inspection, chaque moyen de contenance (6) comprend une sortie au niveau de laquelle les guides d'au moins une paire de guides (9) sont agencés côte à côte et coopèrent l'un avec l'autre pour guider l'objet (2) à l'extérieur du moyen de contenance (6) lorsque l'objet fait face à ladite ouverture de la boîte puis qu'il est inséré à l'intérieur de la boîte.
